Europäisches Patentamt

European Patent Office

Office européen des brevets

(19)

Veröffentlichungsnummer: **0 287 911**
**A2**

## (12) EUROPÄISCHE PATENTANMELDUNG

(21) Anmeldenummer: 88105690.7

(22) Anmeldetag: 09.04.88

(51) Int. Cl.⁴ **B32B 27/06**

(30) Priorität: 24.04.87 DE 3713673
28.01.88 DE 3802471

(43) Veröffentlichungstag der Anmeldung:
**26.10.88 Patentblatt 88/43**

(34) Benannte Vertragsstaaten:
**AT CH DE FR GB IT LI**

(71) Anmelder: **BAYER AG**
**Konzernverwaltung RP Patentabteilung**
**D-5090 Leverkusen 1 Bayerwerk(DE)**

(72) Erfinder: **Wank, Joachim Dipl.-Ing.**
**Zülpicher Strasse 7**
**D-4047 Dormagen 5(DE)**
Erfinder: **Waldenrath, Werner Dipl.-Ing.**
**Maastrichter Strasse 40-44**
**D-5000 Köln 1(DE)**
Erfinder: **Hombach, Rudolf, Dr.**
**Johann-Janssen-Strasse 24**
**D-5090 Leverkusen 1(DE)**

(54) **Schichtstoffe.**

(57) Gegenstand der vorliegenden Erfindung sind Schichtstoffe aus fünf oder sechs Komponenten sowie ihre Verwendung zur Herstellung von Skiern, Surfbrettern und Möbelbauteilen.

EP 0 287 911 A2

## Schichtstoffe

Gegenstand der vorliegenden Erfindung sind Schichtstoffe einer Dicke von 5 bis 100 mm bestehend aus

1. einer 0,1 bis 0,8 mm dicken Folie aus hochtransparentem, thermoplastischem Kunststoff,

2. einer bei Raumtemperatur klebfreien Polyurethanschicht,

3. einer Farbschicht,

4. einer Epoxidharzschicht und

5. einem Träger-oder Kernmaterial aus Polyurethanhartschaum oder Aluminium einer Schichtdicke von 2 bis 30 mm.

Zwischen der dritten und vierten Schicht kann gegebenenfalls eine zweite, bei Raumtemperatur klebfreie Polyurethanschicht 3a liegen.

Gegenstand der vorliegenden Erfindung sind somit außerdem Schichtstoffe einer Dicke von 5 bis 100 mm bestehend aus

1. einer 0,1 bis 0,8 mm dicken Folie aus hochtransparentem, thermoplastischem Kunststoff,

2. einer bei Raumtemperatur klebfreien Polyurethanschicht,

3. einer Farbschicht,

3a. einer bei Raumtemperatur klebfreien Polyurethanschicht,

4. einer Epoxidharzschicht und

5. einem Träger-oder Kernmaterial aus Polyurethanhartschaum oder Aluminium einer Schichtdicke von 2 bis 30 mm.

Aus der DE-OS 3 528 812 (Le A 23 882) sind Schichten bekannt, die jedoch nicht mit Kernmaterialien wie Polyurethanhartschaum, Holz oder Aluminium verbunden sind.

Erfindungsgemäß geeignete Folien aus thermoplastischem Kunststoff sind solche aus bekannten thermoplastischen aromatischen Polycarbonaten mit Gewichtsmittelmolekulargewichten $M_w$ von 25 000 bis 200 000, vorzugsweise von 30.000 bis 120.000 und insbesondere von 30.000 bis 80.000 ( $\overline{M}$ w ermittelt über $\eta_{rel}$ in $CH_2Cl_2$ bei 20°C und einer Konzentration von 0,5 g pro 100 ml); erfindungsgemäß geeignete Folien aus thermoplastischen Kunststoffen sind außerdem vorzugsweise solche aus bekannten, thermoplastischen Polyarylsulfonen, welche linear (siehe DE-OS 27 35 144) oder verzweigt (siehe DE-OS 27 35 092 beziehungsweise DE-OS 23 05 413) sein können.

Geeignete lineare Polyarylsulfone sind alle bekannten aromatischen Polysulfone oder Polyethersulfone mit $\overline{M}$ w (Gewichtsmittelmolekulargewicht gemessen beispielsweise mittels Lichtstreuung) zwischen etwa 15.000 und etwa 55.000, vorzugsweise zwischen etwa 20.000 und etwa 40.000. Derartige Polyarylsulfone sind beispielsweise in DE-OS 17 19 244 bzw. US-PS 33 65 517 beschrieben.

Geeignete verzweigte Polyarylsulfone sind insbesondere die verzweigten Polyarylethersulfone gemäß DE-OS 23 05 413 bzw. US-PS 39 60 815, deren $\overline{M}$ w (Gewichtsmittelmolekulargewicht, gemessen beispielsweise mittels Lichtstreuung) zwischen etwa 15.000 und etwa 50.000, vorzugsweise zwischen etwa 20.000 und 40.000 liegen. (Weitere Einzelheiten dazu siehe DE-AS 30 10 143 (Le A 20 254)).

Für die Folien gemäß Komponente 1 geeignete thermoplastischeKunststoffe sind vorzugsweise auch thermoplastische Celluloseester, thermoplastische Polyvinylchloride, thermoplastische Styrol-Acylnitril-Copolymerisate und thermoplastisches Polymethylmethacrylat.

Erfindungsgemäß geeignete Celluloseester werden nach üblichen Verfahren durch Veresterung der Cellulose mit aliphatischen Monocarbonsäureanhydriden, vorzugsweise Essigsäure-und Buttersäure-oder Essigsäure-und Propionsäureanhydrid,gewonnen. Die in der Rohlösung durchzuführende Hydrolyse wird durch einen geringen Wasserüberschuß so gesteuert, daß ein geringer Hydroxylgehalt (4 bis 25) erhalten wird. Die oxydative Bleiche des aus der Lösung isolierten Celluloseesters muß so durchgeführt werden, daß im Endprodukt kein Oxydationsmittel mehr nachweisbar ist; gegebenenfalls muß eine Nachbehandlung mit Reduktionsmitteln erfolgen. Zur Bestimmung der OH-Zahl werden die freien Hydroxylgruppen des Celluloseesters mit Acetanhydrid in Pyridin verestert, der Überschuß Anhydrid mit Wasser umgesetzt und zurücktitriert [Vorschrift: C.J. Mahn, L.B. Genung und R.F. Williams, Analysis of Cellulose Derivatives, Industrial and Engineering Chemistry, Vol. 14, Nr. 12, 935-940 (1942)].

Die Viskosität der Celluloseester soll 0,3 bis 0,5 Poise, gemessen als 20 gew.-%ige Lösung in Aceton, betragen. Vorzugsweise zu verwendende Celluloseester weisen im Falle der Acetobutyrate einen Essigsäuregehalt von 17 bis 23 Gew.-% und einen Buttersäuregehalt von 45 bis 50 Gew.-%, im Falle der Acetopropionate einen Propionsäuregehalt von 61 bis 69 Gew.-% und einen Essigsäuregehalt von 2 bis 7 Gew.-% auf. Die OH-Zahlen liegen üblicherweise zwischen 4 und 25. Die mittleren Gewichtsmittel der Molekulargewichte $\overline{M}$ w liegen zwischen 10.000 und 1.000.000, vorzugsweise zwischen 100.000 und 500.000.

Erfindungsgemäß geeignete thermoplastische Polyvinylchloride sind beispielsweise die im Handel befindlichen PVC-Typen.

Erfindungsgemäß geeignete thermoplastische Styrol-Acrylnitril-Copolymerisate sind Mischpolymerisate des Styrols mit vorzugsweise Acrylnitril die z.B. durch Suspensionspolymerisation in Gegenwart von Katalysatoren aus den Monomeren bzw. der Mischung der Monomeren mit Mw von 10.000 bis 600.000 erhalten werden (Mw wird gemessen in DMF bei C = 5 g/l und 20°C). Literatur dazu siehe Beilsteins Handbuch der organischen Chemie, vierte Auflage, Duttes Ergänzungswerk B 1.5, Seiten 1163-1169, Springer Verlag 1964. H. Ohlinger, Polystyrol 1. Teil, Herstellungsverfahren und Eigenschaften der Produkte, Springer Verlag (1955).

Zur bekannten Herstellung der Folien gemäß Komponente 1 kann auf DE-OS 25 17 033 (Le A 16 244), oder auf DE-OS 25 31 240 (Le A 16 536) verwiesen werden.

Die Folien gemäß Komponente 1 sind einseitig mattiert oder einseitig strukturiert, was in bekannter Weise erfolgt, in dem die Schmelze des thermoplastischen Kunststoffs durch eine Breitschlitzdüse ausgepreßt wird und die Schmelzfahne über eine mattierte bzw. strukturierte Abkühlwalze abgezogen wird.

Die Folien können auch einseitig poliert und einseitig mattiert sein.

Die Dicke der Folien ist, vorzugsweise zwischen und 0.2 und 0,8 mm.

Zur Herstellung der erfindungsgemäß geeigneten Polyurethanschichten gemäß Komponente 2 und Komponente 3a können sowohl wäßrige, zu transparenten Filmen auftrocknende Dispersionen von vorzugsweise linearen Polyesterpolyurethanen als auch zu transparenten Filmen auftrocknende organische Lösungen von vorzugsweise linearen Polyesterpolyurethanen, die gegebenenfalls ein höherfunktionelles Polyisocyanat als Vernetzer enthalten, verwendet werden. Geeignete Polyurethandispersionen sind beispielsweise solche, auf Basis von linearen Polyesterdiolen, aromatischen oder aliphatischen Diisocyanaten und gegebenenfalls den üblichen Kettenverlängerungsmitteln, die unter Mitverwendung von ionischen Aufbaukomponenten entsprechend der Lehre der US-PS 34 79 310 oder der DE-AS 14 95 847 hergestellt worden sind. Sehr gut geeignet sind auch die wäßrigen Dispersionen von Carboxylat-und Sulfonatgruppen aufweisenden, vorzugsweise linearen Polyesterpolyurethanen, wie sie gemäß DE-OS 28 04 609 erhalten werden können. Im Falle der Verwendung von organischen Lösungen von vorzugsweise linearen Polyesterpolyurethanen kommen vorzugsweise Lösungen von nicht-ionischen linearen Polyesterpolyurethanen in geeigneten Lösungsmitteln in Betracht. Bei diesen Polyurethanen handelt es sich vorzugsweise um Umsetzungsprodukte von (i) aromatischen Diisocyanaten wie 2,4-und/oder 2,6-Diisocyanatotoluol, 4,4'-Diisocyanatodiphenylmethan, Hexamethylendiisocyanat, Isophorondiisocyanat, oder 1,5-Diisocyanatonaphthalin oder deren Gemischen mit (ii) Polyesterdiolen des Molekulargewichtsbereich (Mw) 1.000 bis 4.000, insbesondere auf Basis von Adipinsäure und geeigneten Glykolen wie Ethylenglykol, 1,4-Dihydroxybutan, 1,6-Dihydroxyhexan und deren Gemischen und gegebenenfalls (iii) Kettenverlängerungsmitteln, beispielsweise den zuletztgenannten Glykolen, wobei die Reaktionspartner unter Einhaltung eines NCO/OH-Äquivalentverhältnisses von 0,9 : 1 bis 1 : 1,1, vorzugsweise 0,95 : 1 bis 1 : 1 zum Einsatz gelangen, und wobei pro Mol Polyesterdiol gegebenenfalls 0,1 bis 2 Mol Kettenverlängerer bzw. Kettenverlängerergemisch zum Einsatz gelangen. Geeignete Lösungsmittel für derartige Polyesterpolyurethane sind beispielsweise Ethylacetat, Butylacetat, Methylethylketon, Methylisobutylketon oder aus derartigen Lösungsmitteln bestehende Gemische. Die Dispersionen oder Lösungen werden im allgemeinen mit einem Feststoffgehalt von 10-40 Gew.-% verwendet. Oft kann es zweckmäßig sein, den genannten Lösungen untergeordnete Mengen eines höherfunktionellen Polyisocyanats, beispielsweise an Tris-(6-isocyanatohexyl)-biuret einzuverleiben, um die mechanischen Eigenschaften des letztendlich erhaltenen Polyurethanfilms zu verbessern.

Die Zwischenschicht gemäß Komponente 2 kann entweder kontinuierlich im Rollcoater-oder Rakelverfahren auf die Folie aufgebracht werden, oder aber im Siebdruckverfahren vor dem Drucken des Dekors. Die Menge der Dispersion bzw. Lösung wird im allgemeinen so bemessen, daß Trockenfilmstärken von 2 - 80 μm, vorzugsweise 15 - 30 μm resultieren.

Die Zwischenschicht gemäß Komponente 3a wird im Siebdruckverfahren auf die Farbschicht 3 aufgebracht.

Die Zwischenschichten gemäß den Komponenten 2 und 3a stellen bei Raumtemperatur völlig klebfreie thermoplastische Schichten dar.

Geeignete Farbschichten gemäß Komponente 3 bestehen aus Lacken auf Basis Polyacrylaten oder Mischungen aus Polyacrylat und Celluloseacetobutyrat, oder PVC-Mischpolymerisat, die Pigmente und/oder Farbstoffe enthalten.

Die Farbschichten 3 werden im Siebdruckverfahren auf die Polyurethanschicht 2 gebracht.

Die Dicke der Farbschichten liegt zwischen 5 und 50 μm.

Unter Siebdruckverfahren gemäß vorliegende Erfindung versteht man das Durchdrücken von Farben bzw. Lacken durch ein um einen Rahmen gespanntes Siebgewebe, dessen Maschen partiell je nach Druckvorlage, geschlossen sind. Die verbleibenden Öffnungen in Siebgewebe entsprechen dem Druckbild.

Geeignete Epoxidharzschichten gemäß Komponente 4 sind solche aus den üblichen Epoxidharzen, die mit Aminen oder Säureanhydriden vernetzt werden. Die Herstellung und Vernetzung derartiger Epoxidharze ist literaturbekannt (s. Lee Nevelle, Epoxi Resins).

Ein Beispiel für ein erfindungsgemäß verwendbares Epoxidharz ist das Umsetzungsprodukt aus Epichlorhydrin mit Bisphenol-A und anschließende Härtung mit aliphatischem Polyamin mit einem NH-Äquivalent von 51. Die Dicke der Epoxidharzschicht 4 beträgt 2 bis 80 μm, vorzugsweise 15 bis 30 μm.

Die Zwischenschicht gemäß Komponente 4 wird zwischen die Farbdekorschicht 3 bzw. die zweite Polyurethanschicht 3a und dem Trägermaterial bzw. Kernmaterial durch Begießen oder Streichen aufgeracht, vor dem Verpressen der einzelnen Lagen.

Die Verknüpfung mit dem Trägermaterial oder dem Kernmaterial aus Holz oder Aluminium erfolgt nach Härtung der Epoxidharzschicht.

Als Polyurethanhartschaum ist ein Schaumstoff zu verstehen, der beispielsweise gemäß DE-PS 1 694 138 bekannt ist und hergestellt werden kann. Es sind Schaumstoffe mit einer dichten Außenhaut und einem porösen Kern, der aus Polyisocyanaten, organischen Verbindungen mit mehreren reaktionsfähigen Wasserstoffatomen, Treibmitteln und Zusatzstoffen hergestellt wird.

Die Verknüpfung der Komponenten 1 bis 3 und gegebenenfalls 3a mit dem Polyurethanhartschaum als Trägermaterial oder Kernmaterial erfolgt ebenfalls durch Verpressen der Schichten 1 bis 3 und gegebenenfalls 3a mit der vorgefertigten Polyurethanhartschaumschicht mittels der Epoxidharzzwischenschicht.

Die technischen Vorteile der erfindungsgemäßen Schichtstoffe bestehen darin, daß aus einer Preßform mit dem end gültigen Dekor versehene Fertigteile entnommen werden können, der Dekordruck abriebgeschützt ist, die Herstellung auf einfache Weise erfolgt und durch geeignete Wahl der Komponenten das Eigenschaftsbild der Schichtstoffe in einem breiten Bereich variabel ist.

Die erfindungsgemäßen Schichtstoffe eignen sich zur Herstellung von Skiern, Surfbrettern und Möbelbauteilen.

Beispiel 1

Eine 500 μm dicke Folie aus Polycarbonat mit einer rel. Viskosität von 1,34 wird mit einer 30 %igen. Lösung eines Polyesterurethans auf Basis Toluylendiisocyanat und Polyesterdiol im Rollrakelverfahren beschichtet. Nach Abdampfen des Lösungemittels wird auf die Polyurethanschicht eine Farbe auf Basis Acrylsäureester und Polyvinylacetat im Siebdruckverfahren aufgebracht.

Die so dekorierte Folie wird in die Preßform, zur Herstellung von Skiern so eingelegt, daß die Farbschicht zum Kernmaterial zeigt und mit Epoxidharz auf Basis Bisphenol A und Epichlorhydrin das mit einem aliphatischen Polyamin im Verhältnis 100:70 gemischt wurde, bestrichen. Darauf wird das Kernmaterial aus Holz eingelegt, eine weitere Epoxid-Härtermischung aufgebracht usw.

Nach Verpressen des Verbundes bei 80 bis 90°C kann aus der Preßform ein fertig dekorierter Ski entnommen werden, bei dem das Dekor durch die Innenlage geschützt ist.

Beispiel 2

Verwendung einer Polycarbonatfolie als Träger der Dekorschicht gemäß Beispiel 1, wobei als Siebdruckfarbe eine auf Basis Epoxidharz verwendet wird. Die Weiterverarbeitung erfolgt gemäß Beispiel 1.

Beispiel 3

Verwendung einer Polycarbonatfolie als Träger der Dekorschicht gemäß Beispiel 1 und 2, jedoch unter Verwendung einer Siebdruckfarbe auf Basis Polyurethan.

Die auf diese Weise hergestellten Skier zeichnen sich aus durch

a) dauerhaft abriebfest geschütztem Dekor,

b) außerdem dadurch, daß verkratzte Oberflächen durch Nachpolieren aufgefrischt werden können, ohne daß der Dekor beeinträchtigt wird, und

c) durch die extreme Kälteschlagzähigkeit von Polycarbonat und der PU-Haftschicht gemäß Komponente 2, wodurch Bruch und Delamination bei extremer mechanischer Beanspruchung bei Temperaturen bis -20°C vermieden wird.

**Ansprüche**

1. Schichtstoffe einer Dicke von 5 bis 100 mm bestehend aus

1. einer 0,1 bis 0,8 mm dicken Folie aus hochtransparenten thermoplastischen Kunststoff,

2. einer bei Raumtemperatur klebfreien Polyurethanschicht,

3. einer Farbschicht,

4. einer Epoxidharzschicht und

5. einem Träger-oder Kernmaterial aus Polyurethanhartschaum, Holz oder Aluminium.

2. Schichtstoffe gemäß Anspruch 1, dadurch gekennzeichnet, daß zwischen der Farbschicht 3 und der Epoxidharzschicht 4 eine zweite, bei Raumtemperatur klebfreie Polyurethanschicht 3a liegt.

3. Verwendung der Schichstoffe der Ansprüche 1 und 2 zur Herstellung von Skiern, Surfbrettern und Möbelbauteilen.